# EUROPEAN PATENT APPLICATION

(11) **EP 1 536 030 A1**
(43) Date of publication of application: **01.06.2005**
(21) Application number: 03741295.4
(22) Date of filing: 09.07.2003
(51) Int. Cl.: C22C 38/00, C22C 38/58, F16L 19/08

(54) **PIPE JOINT**

(30) Priority: 09.07.2002 JP 2002199919
(71) Applicant: Fujikin Incorporated, Osaka-shi, Osaka-fu 550-0012 (JP)
(72) Inventor: MATSUHASHI, Ryo, NIPPON STEEL CORP., Futsu-shi, Chiba 293-0011 (JP); SUETSUGU, Kazuhiro, NIPPON STEEL CORPORATION, Tokyo 100-0004 (JP); MIYAGAWA, Hideyuki FUJIKIN INCORPORATED, Osaka-shi, Osaka 550-0 012 (JP); KITA, Toshio FUJIKIN INCORPORATED, Osaka-shi, Osaka 550-0012 (JP); SOGABE, Kyota FUJIKIN INCORPORATED, Osaka-shi, Osaka 550-0012 (JP); YOSHIKAWA, Kazuhiro FUJIKIN INCORPORATED, Osaka-shi, Osaka 550- 0012 (JP); MORIMOTO, Akihiro FUJIKIN INCORPORATED, Osaka-shi, Osaka 550-0012 (JP); SATO, Jyunji FUJIKIN INCORPORATED, Osaka-shi, Osaka 550-0012 (JP); DAIDO, Kunihiko FUJIKIN INCORPORATED, Osaka-shi, Osaka 550-0012 (JP); SHIMOMURA, Yoshinori FUJIKIN INCORPORATED, Osaka-shi, Osaka 550-0012 (JP); NAKAHAMA, Takayasu FUJIKIN INCORPORATED, Osaka-shi, Osaka 550-0012 (JP)
(74) Representative: Paul, Dieter-Alfred, Dipl.-Ing.
(86) International application number: PCT/JP2003/008698
(87) International publication number: WO 2004/005570

(57) **Abstract**

A pipe coupling 30 comprises a tubular body 31 for a pipe 32 to be inserted in through the rear end thereof, a front ring 33 and a back ring 34 to be fitted around the pipe 32 projecting from the rear end of the body 31, and a cap nut 35 for tightening up the front and back rings 33, 34 to fix the pipe 32 to the body 31. The back ring 34 is made of an alloy comprising, in % by weight, 0.001 to 0.01% of C, up to 5% of Si, up to 2% of Mn, up to 0.03% of P, up to 100 ppm of S, up to 50 ppm of O, 18 to 25% of Cr, 15 to 25% of Ni, 4.5 to 7.0% of Mo, 0.5 to 3.0% of Cu, 0.1 to 0.3% of N, and the balance substantially Fe and other inevitable impurities.

## Description

### TECHNICAL FIELD

The present invention relates to pipe couplings, and more particularly to pipe couplings suitable for use in an environment which is liable to cause corrosion.

### BACKGROUND ART

Pipe couplings are already known which comprise a tubular body for a pipe to be inserted in through the rear end thereof, a front and a back ring to be fitted around the pipe projecting from the rear end of the body, and a cap nut for tightening up the front and back rings to fix the pipe to the body.

Back rings for use in pipe couplings of the type mentioned above include those subjected to a heat treatment, such as carburization or nitriding, and thereby improved in hardness and strength. The heat treatment has the advantage of making the back ring smaller to provide a compact pipe coupling without reducing the hardness and strength but involves the problem of giving impaired corrosion resistance to the back ring, and therefore to the entire piping.

An object of the present invention is to provide a pipe coupling which comprises a back ring of improved hardness and higher strength and which nevertheless has unimpaired corrosion resistance.

### DISCLOSURE OF THE INVENTION

The present invention provides a pipe coupling comprising a tubular body for a pipe to be inserted in through a rear end thereof, a front and a back ring to be fitted around the pipe projecting from the rear end of the body, and a cap nut for tightening up the front and back rings to fix the pipe to the body, the pipe coupling being characterized in that the back ring is made of an alloy comprising, in % by weight, 0. 001 to 0.01% of C, up to 5% of Si, up to 2% of Mn, up to 0.03% of P, up to 100 ppm of S, up to 50 ppm of O, 18 to 25% of Cr, 15 to 25% of Ni, 4.5 to 7.0% of Mo, 0.5 to 3.0% of Cu, 0.1 to 0.3% of N, and the balance substantially Fe and other inevitable impurities.

The pipe coupling of the present invention has a back ring which is made of an alloy comprising, in % by weight, 0.001 to 0.01% of C, up to 5% of Si, up to 2% of Mn, up to 0.03% of P, up to 100 ppm of S, up to 50 ppm of O, 18 to 25% of Cr, 15 to 25% of Ni, 4.5 to 7.0% of Mo, 0.5 to 3.0% of Cu, 0. 1 to 0.3% of N, and the balance substantially Fe and other inevitable impurities. The back ring is therefore improved in hardness and strength and can be made unimpaired in corrosion resistance which is liable to decrease with an improvement in hardness and in strength.

The Vickers hardness of the pipe coupling increases in the order of the pipe < the front ring < the back ring. Preferably, the pipe is 150 to 200 in Vickers hardness, the front ring is 250 to 300 in Vickers hardness, and the back ring made of the above alloy is 350 to 400 in Vickers hardness. The back ring then bites into the pipe to an increased extent, with the result that the pipe can be held firmly with the front ring and the back ring.

### BRIEF DESCRIPTION OF THE DRAWINGS

FIG. 1 is an exploded view in longitudinal section of a pipe coupling embodying the invention.
FIG. 2 is a view in longitudinal section showing the pipe coupling of FIG. 1 as assembled.

### BEST MODE OF CARRYING OUT THE INVENTION

An embodiment of the invention will be described below with reference to the drawings.

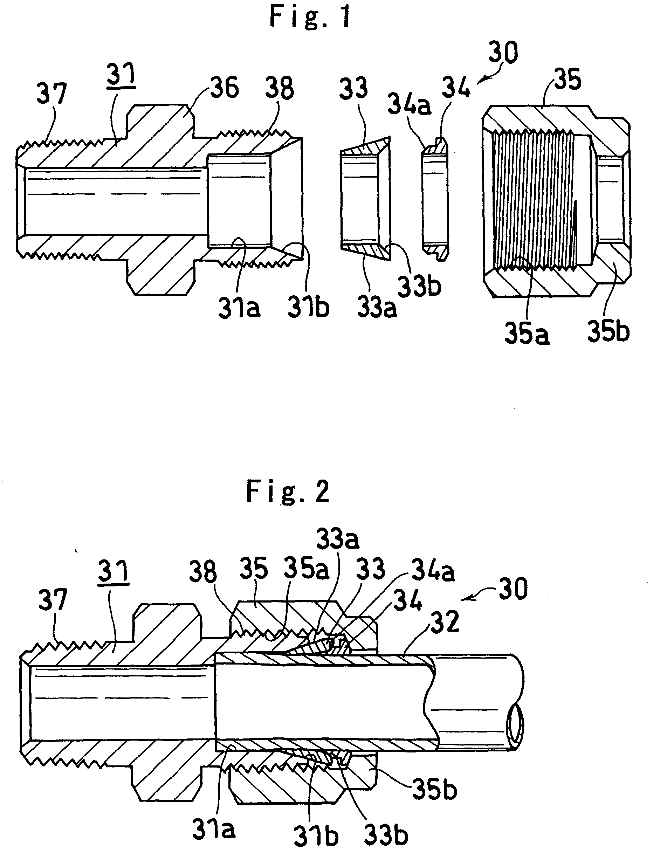

In this specification, the front-rear relationship is based on FIGS. 1 and 2; the left- and right-hand sides of these drawings will be referred to as "front" and "rear," respectively.

FIGS. 1 and 2 show a pipe coupling embodying the invention and comprising a tubular body (coupling member) 31 for a pipe 32 to be inserted in through the rear end thereof, a front ring 33 and a back ring 34 which are to be fitted around the pipe 32 projecting from the rear end of the body 31, and a cap nut 35 for tightening up the front and back rings 33, 34 to fix the pipe 32 to the body 31.

The body 31 has an outer flange 36 formed around the outer periphery of an intermediate portion thereof and externally threaded portions 37, 38 respectively at front and rear end portions thereof. The inner periphery of the body 31 has a large-diameter rear-end portion 31a slightly larger than the front portion of the body inner periphery. The body 31 has a tapered face 31b formed on the inner periphery of its rear end and tapered toward the front.

The cap nut 35 is provided at the front-end side thereof with an internally threaded portion 35a, which is screwed on the externally threaded rear-end portion 38 of the body 31. The cap nut 35 has an inner flange 35b at the rear end thereof.

The front ring 33 is provided on its outer periphery with a tapered face 33a shaped in conformity with the shape of the tapered face 31b at the rear end of the body 31. The front ring 33 has an annular recess 33b formed at the inner periphery of its rear end and tapered toward the front. The back ring 34 is provided at its front end with an annular projection 34a tapered toward the front and fittable into the recess 33b of the front ring 33.

When the cap nut 35 of the pipe coupling 30 is tightened, the front face of the inner flange 35b of the cap nut 35 comes into bearing contact with the rear face of the back ring 34, advancing the back ring 34, whereby the projection 34a of the back ring 34 is fitted into the recess 33b of the front ring 33. The front ring. 33 is moved forward along with the back ring 34 and has its front end brought into contact with the tapered face 31b of the body 31. When the cap nut 35 is further tightened up, the respective front ends of the front ring and the back ring 34 are deformed inward, caused to bite into the pipe 31 and firmly pressed against the pipe 32.

As the materials of the members 31, 32, 33, 34, 35, the body 31, pipe 32, front ring 33 and cap nut 35 are made of SUS316, and the back ring 34 is made of an alloy comprising, in % by weight, 0.001 to 0.01% of C, up to 5% of Si, up to 2% of Mn, up to 0.03% of P, up to 100 ppm of S, up to 50 ppm of O, 18 to 25% of Cr, 15 to 25% of Ni, 4.5 to 7.0% of Mo, 0.5 to 3.0% of Cu, 0.1 to 0.3% of N, and the balance substantially Fe and other inevitable impurities. As to the Vickers hardness of the coupling, the pipe 32 made of SUS316 is about 180, the back ring 34 made of the alloy is about 400, and the front ring 33 is about 300 as given by work hardening.

Since the back ring 34 can be improved in hardness by using the alloy material, it is possible to give the back ring greater differences in hardness, as involved in the increasing hardness order of the pipe < the front ring < the back ring. As a result, the projection 34a of the back ring 34 can be made to bite into the pipe 32 to a greater extent and tightened up firmly on the pipe 32. The alloy has the advantage of giving an improved hardness without entailing impaired corrosion resistance to ensure both an improvement in tightening force and unimpaired corrosion resistance.

### INDUSTRIAL APPLICABILITY

The pipe coupling of the present invention has excellent corrosion resistance, is usable in place of conventional pipe couplings and therefore serves to improve the corrosion resistance of pipe couplings for use in an environment liable to cause corrosion.

## Claims

1. A pipe coupling comprising a tubular body for a pipe to be inserted in through a rear end thereof, a front and a back ring to be fitted around the pipe projecting from the rear end of the body, and a cap nut for tightening up the front and back rings to fix the pipe to the body, the pipe coupling being **characterized in that** the back ring is made of an alloy comprising, in % by weight, 0.001 to 0.01% of C, up to 5% of Si, up to 2% of Mn, up to 0.03% of P, up to 100 ppm of S, up to 50 ppm of 0, 18 to 25% of Cr, 15 to 25% of Ni, 4.5 to 7.0% of Mo, 0.5 to 3.0% of Cu, 0.1 to 0.3% of N, and the balance substantially Fe and other inevitable impurities.

2. A pipe coupling according to claim 1 which increases in the order of the pipe < the front ring < the back ring in Vickers hardness and wherein the pipe is 150 to 200 in Vickers hardness, the front ring is 250 to 300 in Vickers hardness, and the back ring made of said alloy is 350 to 400 in Vickers hardness.
